# EUROPÄISCHE PATENTSCHRIFT

(11) **EP 1 285 196 B1**
(45) Veröffentlichungstag und Bekanntmachung des Hinweises auf die Patenterteilung: **27.07.2005**
(21) Anmeldenummer: 01991713.7
(22) Anmeldetag: 22.12.2001
(51) Int. Cl.: F21S 6/00, F21L 4/02, F21V 3/00

(54) **WOHNRAUMLAMPE, INSBESONDERE TISCH- ODER STEHLAMPE**
LAMP FOR USE IN A LIVING SPACE, ESPECIALLY A TABLE OR FLOOR LAMP
LAMPE POUR HABITATION, NOTAMMENT LAMPE DE TABLE OU LAMPADAIRE

(30) Priorität: 20.01.2001 DE 20101029 U; 14.07.2001 DE 20111739 U
(43) Veröffentlichungstag der Anmeldung: 26.02.2003
(73) Patentinhaber: Zweibrüder Optoelectronics GmbH, 42699 Solingen (DE)
(72) Erfinder: OPOLKA, Harald, 42697 Solingen (DE)
(74) Vertreter: Vomberg, Friedhelm, Dipl.-Phys.
(86) Internationale Anmeldenummer: PCT/DE2001/004954
(87) Internationale Veröffentlichungsnummer: WO 2002/057684

(56) Entgegenhaltungen:
- EP-A- 0 389 724
- DE-U- 29 607 270
- FR-A- 2 262 253
- US-A- 2 744 192
- US-A- 4 502 102
- US-A- 4 536 828
- US-A- 4 727 289

## Beschreibung

Die Erfindung betrifft eine Wohnraumlampe, insbesondere eine Tisch- oder Stehlampe, mit einem Lampenfuß, einem Lampenschaft und einer Lichtquelle, die in im Lampenschaft angeordneten Fassungen austauschbar befestigt ist, und mit einem Leuchtkörper, der von einer Lichtquelle angestrahlt wird.

Herkömmliche Tisch- oder Stehlampen werden mit Glühbirnen betrieben, die in Schraubfassungen eingedreht werden, worüber ein Kontakt mit der Spannungsquelle herstellbar ist. In dem betreffenden Stromkreis ist ein Ein-/Ausschalter angeordnet, der auch als Stufenschalter ausgebildet sein kann, wenn in einer solchen Lampe zwei oder mehr.Glühbirnen getrennt oder gruppenweise geschaltet werden sollen. Lampen mit Glühbirnen haben jedoch die Nachteile, dass ein großer Teil der eingespeisten elektrischen Energie bei nur mäßiger Leuchtkraft als Wärme verloren geht. Glühbirnen mit Glühfäden sind auch nur relativ kurze Zeit, nämlich bis zum Durchbrennen des Glühfadens, haltbar.

Erhebliche Verbesserungen hinsichtlich der Leuchtkraft bieten sogenannte Krypton- oder Halogen-Lampen, letztere besitzen steckbare Kontakte, die in entsprechende Fassungen eingeschoben werden.

Die US-A-4 536 828 beschreibt eine Lampe, bei der in einem Lichtleitkabel Licht in einen Kopf geleitet und von dort aus in Richtung eines Reflektors abgestrahlt wird. Dieser Reflektor ist Teil eines ansonsten zumindest teillichtdurchlässigen Schirms.

Die FR 2 262 253 beschreibt eine Wohnraumlampe mit einem von einer Lichtquelle angestrahlten Leuchtkörper, der in einem Schaft eingefasst oder eingeklebt ist. Dieser Schaft weist einen Sockel zum Einschrauben einer Glühbirne auf.

Die US-A-4 727 289 beschreibt eine mit Leuchtdioden bestückte Lampe, die glühlampenähnlich mit einem Schraubgewinde, einem Bajonettverschluss oder ähnlichem in einer zugehörigen Fassung befestigt werden soll.

Die EP 0 389 724 A1 offenbart eine Lichtquelle, die mit einer Leuchtdiode und einem Reflektor ausgestattet ist. Das von der Leuchtdiode direkt oder indirekt über den Reflektor abgestrahlte Licht durchläuft einen fassettenartig ausgestalteten lichttransparenten Körper.

Es ist Aufgabe der vorliegenden Erfindung, eine Wohnraumlampe zu schaffen, die stromsparend betrieben werden kann und erweiterte Gestaltungsmöglichkeiten bietet.

Diese Aufgabe wird durch die Wohnraumlampe nach Anspruch 1 gelöst. Die Lichtquelle dieser Wohnraumlampe besteht aus einer Mehrzahl von Leuchtdioden,
die im Lampenfuß angeordnet sind und die einen auf das Lampenschaftende austauschbar aufgesteckten Leuchtkörper anstrahlt. Jede LED ist in einem Hohlreflektor angeordnet, dessen hintere Durchbrechung sie durchragt. Diese Durchbrechung ist bis auf ein geringes Spiel bzw. Toleranzmaß gleich groß der Mantelkontur der durchgesteckten Leuchtdiode. Dieser Hohlreflektor dient dazu, die Lichtausbeute zu erhöhen. Zwar ist durch die Form des Leuchtdioden-Glaskörpers bedingt die Hauptstrahlrichtung der Leuchtdiode auf ein relativ kleines Kegelwinkelmaß begrenzt, jedoch sind die seitlich abgestrahlten und ohne Verwendung eines Reflektors durch Absorption verloren gegangenen Strahlungsmengen nicht unbeträchtlich. Weiterhin wird die Leuchtdiode durch den Reflektor zentriert, d.h., die Leuchtdiode wird bei Aufschieben des Reflektors in jedem Fall bei etwa leicht abgeknickten drahtförmigen Stromanschlüssen aufgerichtet, so dass sie exakt längsaxial ausgerichtet ist. Der Hohlreflektor selbst kann über seine Außenmantelgestaltung im Lampenschaft in entsprechender Weise zentriert werden. Jeder Leuchtdiode ist ein einzelner Reflektor zugeordnet, in dem sie zentriert ist, wobei die Anzahl der wabenartig angeordneten Reflektoren zu einem einstückigen Körper mit einem dem Lampenschaftinnenmantel angepassten Außenmantel integriert ist.

Vorzugsweise ist der Leuchtkörper stab- oder kugelförmig und besteht aus einem transparenten Material. Hier kommen insbesondere Glas oder Kunststoff in Betracht, die ggf. auch eingefärbt bzw. teiltransparent sein können. Der besondere Vorteil der erfindungsgemäßen Wohnraumleuchte liegt darin, dass anstelle der relativ großen Glühbirnen, die zudem noch zur besseren Wärmeabfuhr einen weiteren Platzbedarf haben, nunmehr kleinvolumige Leuchtdioden verwendet werden, die in einem relativ durchmesserdünnen Schaft Platz finden. Die Verlagerung der Lichtquelle in den Lampenschaft oder sogar bei Fortlassen des Lampenschaftes in den Lampenfuß, schafft die Möglichkeit, von der Lichtquelle angestrahlte Leuchtkörper beliebig zu formen. Durch die gewährleistete Austauschbarkeit dieser Körper können Lampenformen auch ohne großen Aufwand schnell gewechselt werden.

Die Leuchtdiode oder die Leuchtdioden besitzen eine lange Haltbarkeit, so dass im Regelfall ein Leuchtdiodenaustausch nicht oder nur selten erforderlich ist.

Anders als bei einer Glühbirne, die aufgrund der deutlich geringeren Brenndauer häufig gewechselt werden muß, ist es bei der Verwendung von Leuchtdioden nicht erforderlich, die gleiche Zugänglichkeit im Lampenschaft zu schaffen. Ein weiterer Vorteil der Leuchtdioden liegt in ihrem energiesparenden Betrieb, bei dem nur 13 % der Energie benötigt wird, die für den Betrieb von etwa gleichwertigen Glühbirnen aufzuwenden wäre.

Alternativ kann jedoch als angestrahlter Leuchtkörper auch ein Lampenschirm verwendet werden, der eine hülsen- oder ringförmige Halterung aufweist, die auf den Lampenschaft unmittelbar aufgeschoben wird. Während nach dem Stand der Technik Lampenschirme stets an der Schraubfassung für die Glühbirne befestigt werden mußten und das angestrahlte Lampenschirmmaterial einen großen Abstand von der Glühbirne haben mußte, sind im Rahmen der vorliegenden Erfindung solcherlei Einschränkungen nicht mehr gegeben.

Die Vielzahl von Leuchtdioden kann über eine geeignete Steuer- oder Regelschaltung einzeln oder gruppenweise betätigbar sein. Wie grundsätzlich bei Steh- oder Tischlampen bekannt, kann hierbei durch eine Stufenschaltung die Beleuchtungsstärke stufenweise erhöht werden. Über Regelschaltungen sind auch stufenlose Änderungen möglich. Bei Verwendung verschiedener Dioden mit einem jeweils verschiedenen abstrahlbaren Farbspektrum kann auch über eine Regelschaltung die abgestrahlte Farbmischung variiert werden.

Nach einer weiteren Ausgestaltung der Erfindung ist der stabförmige, kugelförmige oder andersartig sphärisch geformte Leuchtkörper aus Kunststoff ein Vollprofilkörper, an dessen Mantelfläche und/oder in dessen Inneren Konturen in Form von Ausnehmungen, Erhebungen oder Materialverdichtungen eingearbeitet sind. Alternativ hierzu kann der betreffende Leuchtkörper auch ein Hohlkörper sein, an dessen Mantelfläche Konturen der genannten Art eingearbeitet sind. In allen vorbeschriebenen Fällen werden im oder am Leuchtkörper Bereiche geschaffen, die gegenüber den anderen Bereichen einen geänderten optischen Brechungsindex aufweisen. Dies führt zu Brechungen und/oder Lichtreflexionen, durch die entsprechend den Konturen sich abzeichnende Raumformen leuchtend darstellbar sind. Im einfachsten Fall eines Vollprofilkörpers können solche Konturen dadurch erzeugt werden, dass der Profilkörpermantel partiell aufgerauht wird, dass Ringe, Spiralen oder ähnliches durch Zerspanen in die Mantelfläche eingearbeitet oder durch gezielte Laserbehandlung an der Mantelfläche oder im Inneren Gravuren eingearbeitet werden. Insbesondere ermöglicht eine Laserbearbeitung mit den heute zur Verfügung stehenden Fokussierungen eine gezielte lokale Erwärmung, mit der ein Hohl- oder Vollkörper (letzterer auch im Inneren) bearbeitet werden kann.

Aus fertigungstechnischen Gründen ist es bei bestimmten Körpern sowie kugelförmigen Leuchtkörpern empfehlenswert, zwei Halbschalen zu fertigen, die an ihren Rändern zusammengefügt werden. Insbesondere werden Hohlkörper durch ein Blasform- oder ein Spritzgießverfahren hergestellt.

Im Rahmen der vorliegenden Erfindung ist auch noch eine weitere Variante der Wohnraumlampe möglich, bei der der Lampenschaft als stabförmige Taschenlampe ausgebildet ist und einen inneren Hohlraum als Batterieschubfach aufweist, der nach Abschrauben des Lampenschaftes vom Lampenfuß mittels eines Batterieschubfachdeckels verschließbar ist. Durch diese Maßnahme ist es möglich, den Leuchtkörper abzunehmen, den Lampenschaft abzuschrauben, mit einem geeigneten Batteriesatz (je nach geforderter Spannung) zu bestücken und das Batterieschubfach durch einen Deckel zu verschließen, wonach der mit einem Druckschalter ausgebildete Lampenschaft als tragbare Taschenlampe verwendbar ist. Die betreffende Wohnraumlampe ist in diesem Fall so ausgebildet, dass aus dem Lampenfuß ein Stift mit einem endseitigen Kontakt herausragt, der bis zum Ende des "Batterieschubfaches" reicht und für eine schaltbare Spannungsversorgung der Dioden sorgt, wenn der Lampenschaft im Lampenfuß eingeschraubt ist.

Alternativ hierzu ist es selbstverständlich möglich, auf eine externe Stromversorgung völlig zu verzichten und den Lampenfuß derart auszugestalten, dass in eine dort vorhandene Bohrung die mit Batterien bestückte Taschenlampe rückseitig einzustecken und auf den Lampenkopf den angestrahlten Leuchtkörper aufzusetzen. Der Leuchtkörper ist vorzugsweise derart auszugestalten, dass er einen Steckansatz aufweist, der in die freie Öffnung am Lampenkopfende klemmend eingesteckt wird.

Ausführungsbeispiele der Erfindung sind in den Zeichnungen dargestellt. Es zeigen
- Fig. 1: eine Seitenansicht eines ersten Ausführungsbeispieles,
- Fig. 2: eine Querschnittsansicht der Lampe nach Fig. 1,
- Fig. 3: eine Seitenansicht einer weiteren Ausführungsform,
- Fig. 4: eine Querschnittsansicht dieser Ausführungsform,
- Fig. 5: eine teilgeschnittene Seitenansicht einer weiteren Ausführungsform,
- Fig. 6 und 7: jeweils perspektivische Ansichten dieser Ausführungsform aus unterschiedlichen Richtungen,
- Fig. 8a bis c: verschiedene Ansichten bzw. Teilansichten einer weiteren Ausführungsform der Erfindung mit einem kugelförmigen Leuchtkörper,
- Fig. 9a bis c: eine weitere Ausführungsform der erfindungsgemäßen Lampe mit einem stabförmigen Leuchtkörper, an dessen Mantelfläche mehrere ringförmige Ausnehmungen eingearbeitet sind,
- Fig. 10: eine perspektivische Ansicht eines weiteren Ausführungsbeispieles mit einem stabförmigen Leuchtkörper mit mantelseitig linear ausgebildeten Ausnehmungen und
- Fig. 11: eine perspektivische Ansicht einer Lampe mit einem stabförmigen Leuchtkörper, an dessen Mantelfläche spiralförmige Ausnehmungen vorgesehen sind.

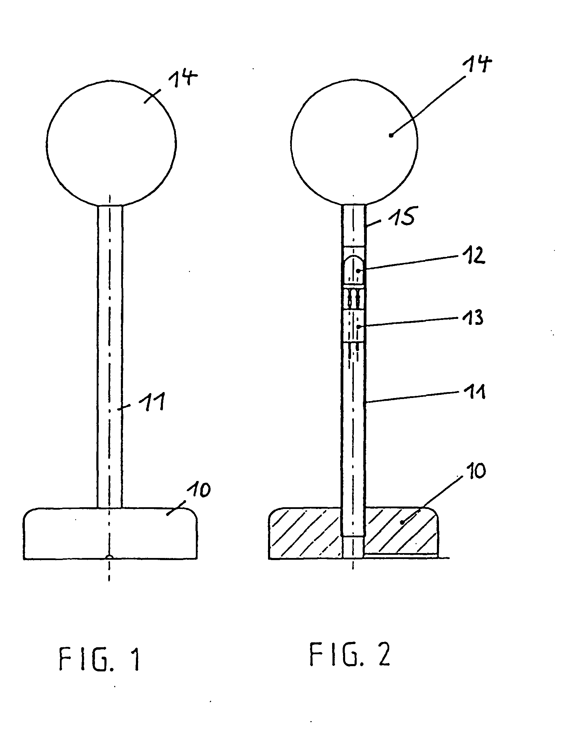

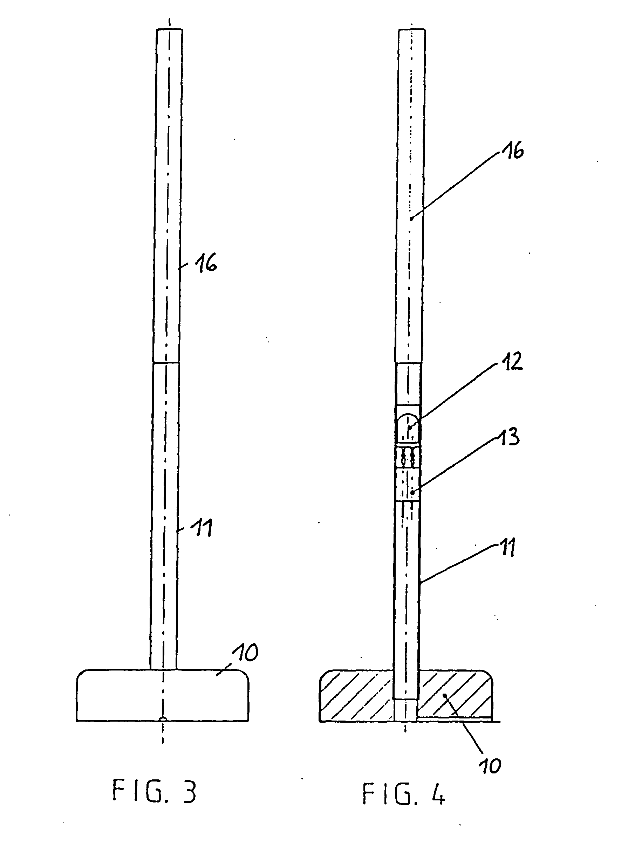

Die Wohnraumlampe besteht aus einem Lampenfuß 10, der üblicherweise einen seitlichen Kabelkanal besitzt, durch den die Stromleitung geführt ist. Im Lampenfuß kann ggf. auch ein Transformator angeordnet sein, es sei denn, dass aufgrund der gewünschten Lampenfußgröße eine externe Transformatoranordnung notwendig wird. Aus diesem Lampenfuß erstreckt sich in vertikaler Richtung ein Lampenschaft 11, innerhalb dem eine Leuchtdiode 12, die in eine Fassung 13 eingesteckt ist, aufgenommen ist. Die Leuchtdiode 12 besitzt zwei drahtförmige Kontakte, die - ähnlich wie bei nach dem Stand der Technik bekannten Halogen-lampen - in entsprechende Buchsen eingesteckt werden, die über elektrische Zuleitungen mit Spannung versorgt werden können. Auf das Lampenschaftende ist erfindungsgemäß ein Leuchtkörper aufgesteckt, der entweder, wie in Fig. 1 und 2 dargestellt, eine Acrylkugel 14 - hier mit einem Schaftansatz 15 zum Aufstecken auf das Ende des Lampenschaftes 11 - oder einem Acrylstab 16 nach Fig. 3 und 4 bestehen kann, der im vorliegenden Fall durchmessergleich wie der Lampenschaft ausgeführt ist. Wie aus Fig. 1 bis 4 zu erkennen, wird stets derselbe aus Lampenfuß und Lampenschaft bestehende Unterbau verwendet, wohingegen die Leuchtkörper austauschbar sind, hinsichtlich deren Formgestaltung ein großes Variationsspektrum besteht.

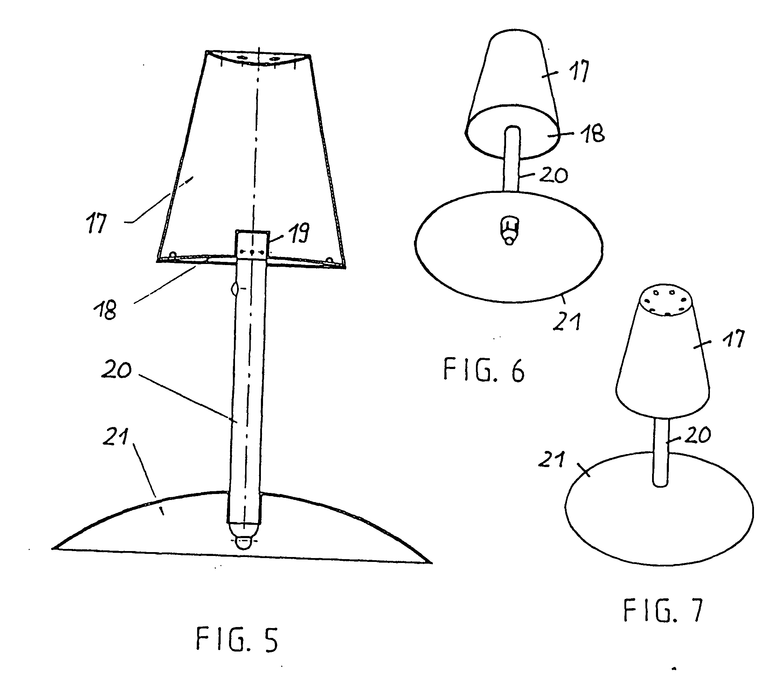

Fig. 5, 6 und 7 zeigen eine Lampe mit einem Lampenschirm 17, der an seiner Unterseite einen im wesentlichen geschlossenen Deckel 18 besitzt, in dessen Zentrum eine etwa hülsenförmige Aufnahme 19 angeordnet ist, die über den Lampenschaft 20 geschoben ist, der im vorliegenden Fall aus einer stabförmigen Taschenlampe mit Leuchtdioden als Lichtquelle besteht. Diese stabförmige Taschenlampe ist in einen Lampenfuß eingesteckt, der mittig eine Aufnahmeöffnung besitzt, welche der Form entspricht, welche die Taschenlampe an dem dem Lampenkopf entgegengesetzten Ende besitzt. Bei einer solchen Lampe kann der Lampenschirm abgenommen und die Taschenlampe vom Lampenfuß gelöst und mitgeführt werden. Die Stromzufuhr wird hierbei über in den Lampenschafthohlraum eingelegte Batterien oder einen alternativ hierzu verwendbaren Adapter gewährleistet, der mit einer herkömmlichen Steckdose über einen Transformator verbunden wird.

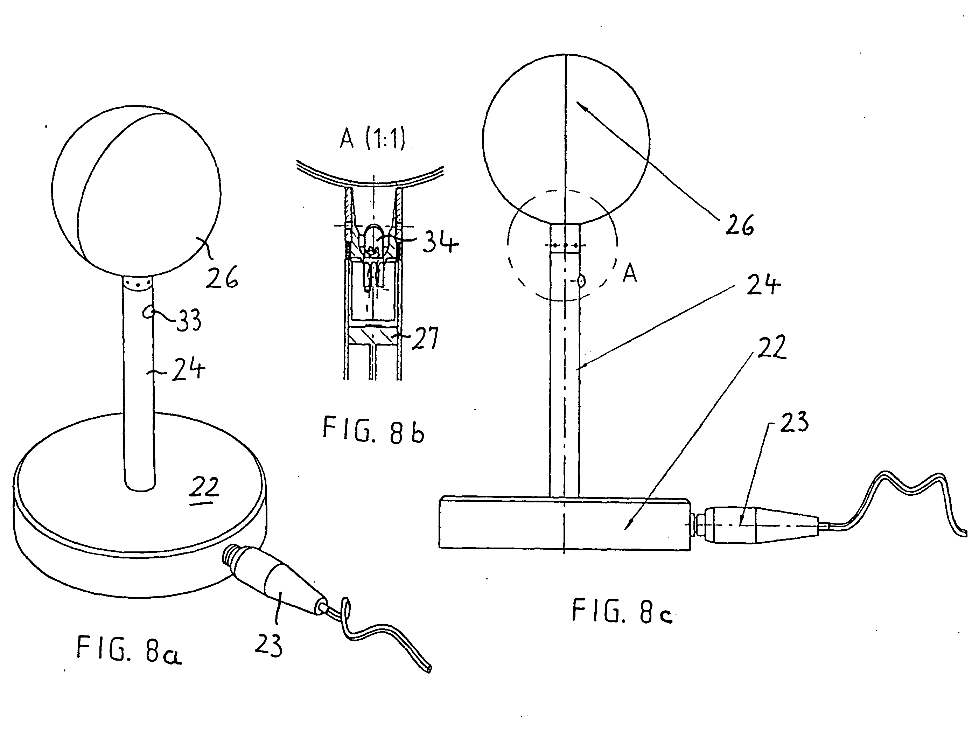

Die in Fig. 8a bis c dargestellte Wohnraumlampenversion (hier als Tischlampe) zeigt einen scheibenartigen Lampenfuß 22, der eine Buchse aufweist, in die ein Stecker 23 zur Spannungsversorgung einfügbar ist. Aus dem Lampenfuß ragt ein dort über eine Gewindeverbindung eingeschraubter Lampenschaft 24 senkrecht heraus, der dem Lampenschaft 20 der Lampe nach Fig. 5 entspricht und einen inneren Hohlraum als Batterieschubfach aufweist, das über einen endseitigen Deckel 25 (nach Herausschrauben und Einschieben der Batterien) verschließbar ist, so dass der Lampenschaft 24, von dem der Leuchtkörper 26 abgetrennt worden ist, als Taschenlampe verwendet werden kann. Der Lampenschaft besitzt einen Ein-/Ausschalter 33, über den die Diode 26 (siehe Fig. 8b) eingeschaltet werden kann. In dem in Fig. 8a und c dargestellten Zustand ragt in dem Batteriehohlraum eine Kontaktsäule 27 herein, die über den Schalter 33 für die Spannungsversorgung der Diode sorgt. In das offene Ende des Lampenkopfes sind zylinderförmige Ansätze, welche mit dem Leuchtkörper 26 verbunden sind, hineingesteckt, so dass der Leuchtkörper 26 reibschlüssig bzw. klemmend befestigt ist. Der Leuchtkörper 26 besteht im vorliegenden Fall aus zwei kugelförmigen Halbschalen, die durch ein Kunststoffblasformverfahren hergestellt und miteinander zu einer Kugel verbunden sind.

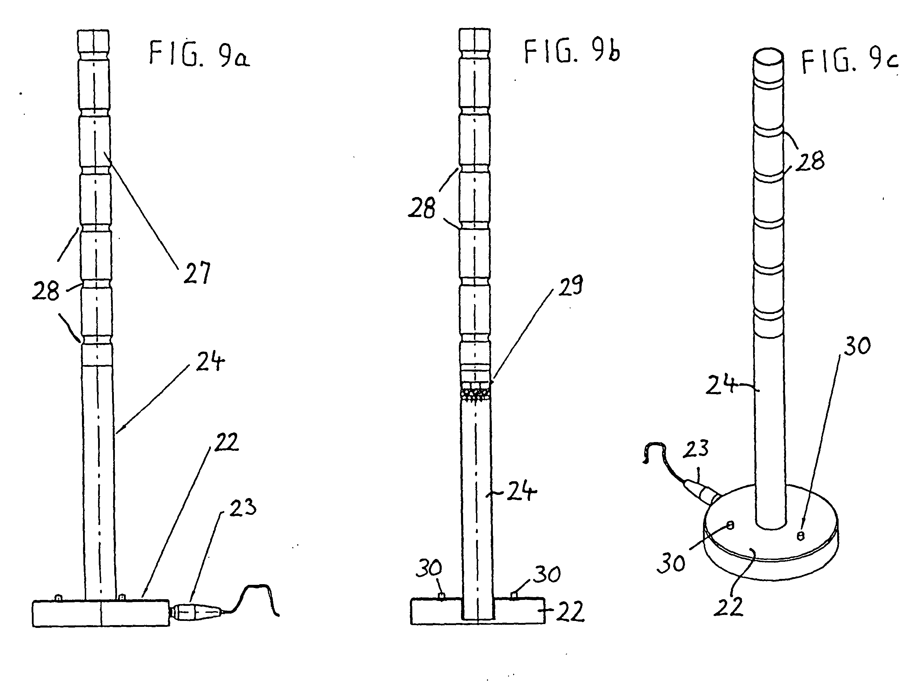

Weitere Ausführungsvarianten einer Wohnraumlampe, die als Tischlampe oder Stehlampe ausgebildet sein kann, sind Fig. 9a bis c, 10 und 11 zu entnehmen. Auch dort ist in einem Lampenfuß 22 über einen Stecker 23 für eine Stromversorgung gesorgt. Als Leuchtkörper dient ein im wesentlichen stabförmiger Acrylglas-Vollkörper 27, in den mantelseitig Nuten 28 eingebracht sind. Der Lampenschaft 24 ist an seinem oberen Ende mit mehreren, z.B. acht Leuchtdioden 29 bestückt, die jeweils monochromes Licht unterschiedlicher Farben (z.B. Rot, Blau und Grün) abstrahlen. So können beispielsweise drei rotes Licht, drei blaues Licht und zwei grünes Licht abstrahlende Dioden miteinander kombiniert werden, wobei jede Diodenfarbe d.h. jede Gruppe von Dioden mit der gleichen Lichtfarbe über einen der Schalter 30 ein- und ausgeschaltet werden können (der dritte Schalter ist in den Abbildungen verdeckt und nicht sichtbar). Schaltet man eine oder mehrere Dioden ein, so wird das senkrecht nach oben in Richtung des Leuchtkörpers 27 abgestrahlte Licht im Bereich der Nuten 28 derart gebrochen bzw. reflektiert, dass die Nuten 28 als leuchtende Ringe erscheinen.

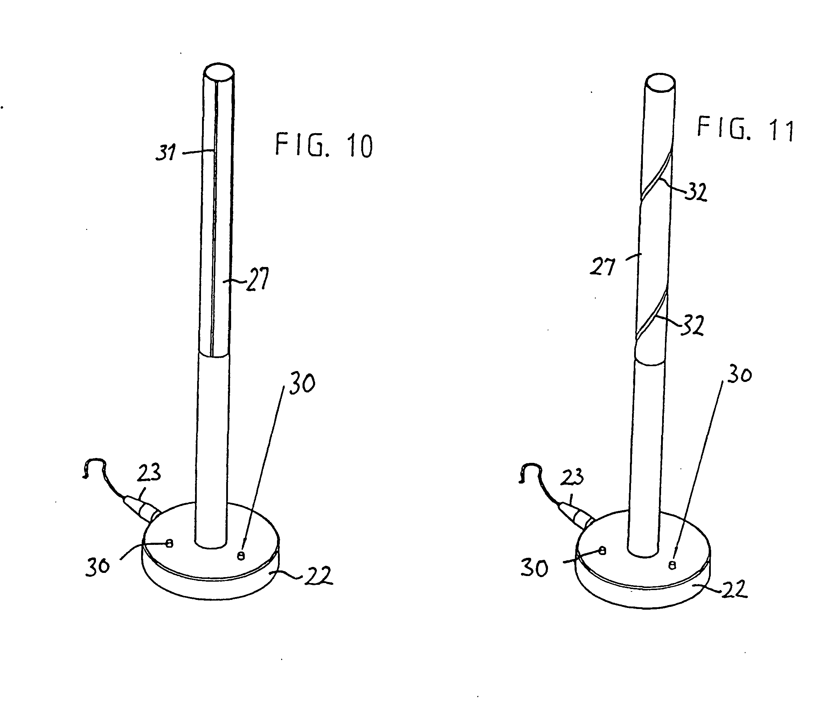

Die in Fig. 10 dargestellte Lampe ist entsprechend aufgebaut, wobei jedoch anstelle der ringförmigen Nuten parallel zur Längsachse verlaufende Längsnuten 31 im Acrylglaskörper 27 eingebracht sind. Entsprechendes gilt für die Lampe nach Fig. 11, bei der die Nuten 32 wendelförmig um den Mantelkörper des Leuchtkörpers 27 verlaufen. Betreffende Nuten können durch Zerspanungswerkzeuge, Laser oder ähnliche Mittel eingebracht werden. Anstelle der Nuten können auch rippenförmige Erhebungen entsprechender Formgestaltungen oder beliebige mantelseitig wie im Vollkörperinneren eingearbeitete Konturen, wie geometrische Figuren, Bilddarstellungen oder ähnliches verwendet werden. Bei den in Fig. 8 bis 10 dargestellten Lampenformen werden besondere Effekte dadurch erzielt, dass das abgestrahlte Licht an Grenzflächen gebrochen oder unter Umständen auch reflektiert wird, so dass nicht nur eine vertikale Abstrahlung nach oben erreicht wird, sondern ein räumliches Lichtgebilde (in Fig. 8 etwa in Form einer beleuchteten Seifenblase sowie im übrigen durch die eingeprägten Konturen) erzeugt werden.

Der erreichte Effekt läßt sich noch dadurch verstärken, wenn mehrere Dioden unterschiedlicher Lichtfarbe getrennt schaltbar bzw. in der Helligkeit regelbar vorhanden sind. In diesem Fall lassen sich Mischfarben erzeugen, die entweder über die Einschaltzeit konstant bestehen bleiben oder bei einer entsprechenden Schaltungsanordnung periodisch oder kontinuierlich wechseln können. Die Zahl der Farbvariationen läßt sich so beliebig ebenso wie die Strahlungsintensität variieren.

## Patentansprüche

1. Wohnraumlampe, insbesondere Tisch- oder Stehlampe mit einem Lampenfuß (10, 21), einem Lampenschaft (11, 20) und einer Lichtquelle, die in im Lampenschaft angeordneten Fassungen austauschbar befestigt ist, und mit einem Leuchtkörper (14, 16,17,26,27), der von einer Lichtquelle angestrahlt ist,
**dadurch gekennzeichnet,**
**dass** die Lichtquelle aus einer Mehrzahl von Leuchtdioden (29) besteht, die im Lampenschaft (11, 20) angeordnet sind, dass jeder Leuchtdiode (29) ein einzelner Reflektor zugeordnet ist, innerhalb dessen sie zentriert ist, dass die Anzahl der wabenartig angeordneten Reflektoren zu einem einstückigen Körper mit einem den Lampenschaftinnenmantel angepassten Außenmantel integriert ist und dass der Leuchtkörper (14, 16, 17, 26, 27) austauschbar auf das Lampenschaftende aufgesteckt ist.

2. Wohnraumlampe nach Anspruch 1, **dadurch gekennzeichnet, dass** der Leuchtkörper (14, 15, 16) stab- oder kugelförmig ist und aus einem transparenten Material, vorzugsweise Kunststoff besteht.

3. Wohnraumlampe nach Anspruch 1 oder 2, **dadurch gekennzeichnet, dass** der Leuchtkörper ein Lampenschirm (17) mit einer hülsen- oder ringförmigen Halterung ist, die auf den Lampenschaft (20) aufgeschoben wird.

4. Wohnraumlampe nach einem der Ansprüche 1 bis 3, **dadurch gekennzeichnet, dass** jede Leuchtdiode (12) in einem Hohlreflektor angeordnet ist, dessen hintere Durchbrechung sie durchragt, wobei diese Durchbrechung bis auf ein geringes Spiel bzw. Toleranzmaß gleich groß der Mantelkontur der Leuchtdiode ist.

5. Wohnraumlampe nach einem der Ansprüche 1 bis 4, **dadurch gekennzeichnet, dass** die Leuchtdioden (12) einzeln oder gruppenweise über eine Steuer- oder Regelschaltung betätigbar sind.

6. Wohnraumlampe nach einem der Ansprüche 2 bis 5, **dadurch gekennzeichnet, dass** der stabförmige, kugelförmige oder andersartig sphärisch geformte Leuchtkörper (14, 16, 17, 27) aus Kunststoff ein Vollprofilkörper ist, an dessen Mantelfläche und/oder in dessen Inneren Konturen in Form von Ausnehmungen, Erhebungen oder Materialverdichtungen eingearbeitet sind.

7. Wohnraumlampe nach einem der Ansprüche 2 bis 5, **dadurch gekennzeichnet, dass** der stabförmige, kugelförmige oder andersartig sphärisch geformte Körper ein Hohlkörper ist, an dessen Mantelfläche Konturen in Form von Ausnehmungen, Erhebungen oder Materialverdichtungen eingearbeitet sind und/oder dass der kugelförmige oder sphärisch geformte Leuchtkörper aus zwei zusammengesteckten Schalen bzw. Halbkugelschalen (26) besteht.

8. Wohnraumlampe nach Anspruch 7, **dadurch gekennzeichnet, dass** der Hohlkörper (26) durch ein Blasform- oder Spritzgießverfahren hergestellt ist.

9. Wohnraumlampe nach einem der Ansprüche 1 bis 8, **dadurch gekennzeichnet, dass** der Lampenschaft (20) als stabförmige Taschenlampe ausgebildet ist und einen inneren Hohlraum als Batterieschubfach aufweist, der nach Abschrauben des Lampenschaftes vom Lampenfuß mittels eines Batterieschubfachdeckels verschließbar ist.

## Claims

1. Living-space lamp, in particular a table or floor lamp having a lamp base (10, 21), a lamp shaft (11, 20), and a light source that is removably received in a socket in the shaft, and an illuminated body (14, 16, 17, 26, 27) irradiated by a light source,
charachterized in that,
the light source consists of a plurality of light-emitting diodes (12) that are mounted in the lamp shaft (11, 20) that each light emitting diode integrated within a single reflector therein being centered, that the number of honeycomb-like arranged reflectors are integrated in a one-piece body having an outer surface corresponding to the lamp shaft inner surface and that the illuminated body (14, 16, 17, 26, 27) is put up removably onto the lamp shaft end.

2. Living-space lamp according to claim 1, **characterized in that** the light-emitting body (14, 15, 16,) is rod or ball-shaped and is made of a transparent material, preferably plastic.

3. Living-space lamp according to claim 1 or 2, **characterized in that** the light-emitting body is a lamp shade (17) with a sleeve- or ring-shapred holder that fits on the lamp shaft (20).

4. Living-space lamp according to one of claims 1 to 3, **characterized in that** every light-emitting diode (12) is provided in a hollow reflector having a rear opening through which it extends, this opening having a size that closey upto an allowed clearance or tolerance fits the shape of the light-emitting diode.

5. Living-space lamp according to one of claims 1 to 4, **characterized in that** the light-emitting diodes (12) are operable individually or in groups by a control circuit.

6. Living-space lamp according to one of claims 2 to 5, **characterized in that** the rod-shaped, ball-shaped, or otherwise spherically shaped light-emitting body of plastic is solid and has an outer or inner surface shaped with recesses, raised parts, or thickened regions.

7. Living-space lamp according to one of claims 2 to 5, **characterized in that** the rod-shaped, ball-shaped, or otherwise spherically shaped body is hollow and is formed on its surface with raised, recessed, or thickend shapes and/or that the ball-shaped, or spherically shaped light-emitting body is formed of two mounted-together shells or hemispheres (26).

8. Living-space lamp according to claim 7, **characterized in that** the hollow body (26) is formed by blow or injection molding.

9. Living-space lamp according to one of claims 1 to 8, **characterized in that** the lamp shaft (20) is a rod-shaped flash-light and has an internal chamber that is adapted to hold batteries and that is closable by a battery-compartment cover after unscrewing the lamp shaft from the lamp base.

## Revendications

1. Lampe pour habitation, en particulier lampe de table ou lampadaire avec un pied de lampe (10, 21), une tige de lampe (11, 20) et une source lumineuse qui est fixée de manière échangeable dans des douilles disposées dans ladite tige de lampe, et avec un corps lumineux (14, 16, 17, 26, 27) qui est illuminé d'une source lumineuse,
**caractérisée par le fait**
**que** la source lumineuse est constituée par une pluralité de diodes émettrices de lumière (29) qui sont disposées dans ladite tige de lampe (11, 20), qu'à chacune des diodes émettrices de lumière (29) est associé un réflecteur individuel à l'intérieur duquel elle est centrée, que le nombre des réflecteurs disposés comme nids d'abeilles est intégré pour former un corps en une pièce ayant une surface latérale extérieure adaptée à la surface latérale intérieure de la tige de lampe, et que le corps lumineux (14, 16, 17, 26, 27) est rapporté de manière échangeable sur l'extrémité de la tige de lampe.

2. Lampe pour habitation selon la revendication 1, **caractérisée par le fait que** ledit corps lumineux (14, 15, 16) présente une forme de bâton ou de boule et est fait d'une matière transparente, de préférence de matière plastique.

3. Lampe pour habitation selon la revendication 1 ou 2, **caractérisée par le fait que** ledit corps lumineux est un abat-jour (17) comprenant un support en forme de douille ou d'anneau que l'on fait glisser sur la tige de lampe (20).

4. Lampe pour habitation selon l'une des revendications 1 à 3, **caractérisée par le fait que** chacune des diodes émettrices de lumière (12) est disposée dans un réflecteur creux ayant une ouverture arrière à travers laquelle la diode fait saillie, cette ouverture étant égale au contour de la surface latérale de la diode émettrice de lumière, à l'exception d'un faible jeu ou bien d'une faible mesure de tolérance.

5. Lampe pour habitation selon l'une des revendications 1 à 4, **caractérisée par le fait que** les diodes émettrices de lumière (12) peuvent être actionnées individuellement ou en groupes par l'intermédiaire d'un circuit de commande ou de réglage.

6. Lampe pour habitation selon l'une des revendications 2 à 5, **caractérisée par le fait que** le corps lumineux (14, 16, 17, 27) en matière plastique présentant une forme de bâton, de boule ou formé d'une manière sphérique différente est un corps en profil plein sur la surface latérale duquel et/ou à l'intérieur duquel sont réalisés des contours sous forme de creux, de bosses ou de zones à matière comprimée.

7. Lampe pour habitation selon l'une des revendications 2 à 5, **caractérisée par le fait que** le corps présentant une forme de bâton, de boule ou formé d'une manière sphérique différente est un corps creux sur la surface latérale duquel sont réalisés des contours sous forme de creux, de bosses ou de zones à matière comprimée, et/ou que le corps lumineux en forme de boule ou formé de manière sphérique se compose de deux cuvettes ou bien cuvettes hémisphériques (26) rapportées l'une sur l'autre.

8. Lampe pour habitation selon la revendication 7, **caractérisée par le fait que** le corps creux (26) est fabriqué par soufflage ou par un procédé de moulage par injection.

9. Lampe pour habitation selon l'une des revendications 1 à 8, **caractérisée par le fait que** la tige de lampe (20) est réalisée en tant que lampe de poche en forme de bâton et présente un espace creux intérieur comme tiroir-piles (compartiment à piles), qui - après avoir dévissé la tige de lampe du pied de lampe - peut être fermé par un couvercle pour tiroir-piles.
